# EUROPÄISCHE PATENTSCHRIFT

(11) **EP 4 208 423 B1**
(45) Veröffentlichungstag und Bekanntmachung des Hinweises auf die Patenterteilung: **04.11.2026**
(21) Anmeldenummer: 21770235.6
(22) Anmeldetag: 02.09.2021
(51) Int. Cl.: C03C 21/00, C03C 3/087, C03C 3/091

(54) **REGENERATIONSMATERIAL ZUM REGENERIEREN EINER FÜR EINEN GLASHÄRTUNGS- UND/ODER GLASVERFESTIGUNGSPROZESS EINGESETZTEN SALZSCHMELZE**
REGENERATION MATERIAL FOR REGENERATION OF A SALT MELT USED FOR A GLASS TOUGHENING AND/OR GLASS STRENGTHENING PROCESS
MATÉRIAU DE RÉGÉNÉRATION POUR LA RÉGÉNÉRATION D'UN BAIN DE SEL UTILISÉ POUR UN PROCÉDÉ DE DURCISSEMENT DE VERRE ET/OU DE RENFORCEMENT DE VERRE

(30) Priorität: 03.09.2020 LU 102047
(43) Veröffentlichungstag der Anmeldung: 12.07.2023
(73) Patentinhaber: ReViSalt GmbH, 09599 Freiberg (DE)
(72) Erfinder: VOLAND, Thomas, 04720 Grossweitzchen (DE); GROSS, Martin, 09509 Pockau-Lengefeld (DE)
(74) Vertreter: Hoffmann, Jürgen
(86) Internationale Anmeldenummer: PCT/EP2021/074287
(87) Internationale Veröffentlichungsnummer: WO 2022/049207

(56) Entgegenhaltungen:
- WO-A1-2014/045979
- WO-A2-2020/112395
- DE-B2- 1 771 232
- DE BARDI MONICA ET AL: "Potash-lime-silica glass: protection from weathering", HERITAGE SCIENCE, vol. 3, no. 1, 1 December 2015 (2015-12-01), pages 22, XP055802771, DOI: 10.1186/s40494-015-0051-4

## Beschreibung

Die Erfindung betrifft die Verwendung eines Regenerationsmaterials zum Regenerieren einer für einen Glashärtungs- und/oder Glasverfestigungsprozess eingesetzten Salzschmelze, die Kaliumnitrat beinhaltet oder aus Kaliumnitrat besteht.

Die Erfindung betrifft darüber hinaus eine Anlage zum Härten und/oder Verfestigen von Glas beinhaltend ein Salzbad mit einer Salzschmelze, die Kaliumnitrat beinhaltet oder aus Kaliumnitrat besteht.

Die Erfindung betrifft des Weiteren ein Verfahren zum Härten und/oder Verfestigen von Glasgegenständen.

Es ist bekannt, dass durch Ionen-Austausch innerhalb einer dünnen Oberflächenschicht starke Druckspannungen, die die Festigkeitseigenschaften des Glases erheblich verbessern, erzielt werden können, wenn man Glas einer definierten Behandlung in einer Salzschmelze unterzieht. Bei der Behandlung in einer Salzschmelze wandern Ionen eines ersten Typs in das Glas ein, während das Glas gleichzeitig Ionen eines zweiten Typs in die Salzschmelze abgibt. Nachteiliger Weise nimmt die Wirkung der Salzschmelze in Abhängigkeit von der Häufigkeit von deren Verwendung ab, insbesondere weil die Salzschmelze an Ionen des ersten Typs verarmt und sich Ionen des zweiten Typs in der Salzschmelze anreichern. Dies führt dazu, dass die Salzschmelze häufig ausgetauscht werden muss.

Es ist insbesondere bekannt, einen Vorspannprozess bei erhöhten Temperaturen in einer Salzschmelze aus Kaliumnitrat durchzuführen, wobei kleiner Alkaliionen (Natrium, Lithium) gegen größere Kaliumionen ausgetauscht werden. Allerdings verbleiben die ausgetauschten Alkaliionen in der Salzschmelze, was die Wirksamkeit der Salzschmelze verringert. Außerdem kommt es für das Ergebnis des Vorspannprozesses in nachteiliger Weise zu einer Zersetzung der Salzschmelze über das Nitrit zum Hydroxid.

Die zunehmende Verschlechterung der Wirksamkeit der Salzschmelze kann durch die Verwendung eines Regenerationsmaterials zumindest hinausgezögert werden.

Beispielsweise ist aus DE 17 71 232 B2 ein Verfahren zum Austausch von Ionen zwischen einer Salzschmelze und Glas zum Zwecke der Veränderung von deren Eigenschaften bekannt, wobei die in die Salzschmelze eingewanderten Ionen von einem in der Salzschmelze in getrennter Phase vorliegenden Regenerationsmaterial aufgenommen und gleichzeitig beim Ionenaustausch benötigte Ionen an die Salzschmelze abgegeben werden. Es wird eine Salzschmelze verwendet, der als Regenerationsmaterial eine Hilfssubstanz zugesetzt ist, die ein Akzeptor für Sauerstoffionen ist bzw. eine Säurefunktion hat und die zur Komplexbildung unter Einbeziehung der aus dem Glas oder aus dem Regenerationsmaterial in die Salzschmelze eingewanderten Ionen befähigt ist und die Redoxreaktionen in der Salzschmelze begünstigt.

Aus DE 22 60 278 C3 ist ein Verfahren zur kontinuierlichen Regenerierung eines Salzschmelzbades, das beim Ionenaustausch von Gläsern eingesetzt wird bekannt. Eine Anode und eine Kathode werden bei dem Verfahren in das Salzschmelzbad eingeführt, wobei die Kathode in einer mit der Salzschmelze gefüllten Kammer angeordnet wird, die von dem übrigen Salzschmelzbad mittels einer Trennwand aus einem Material isoliert ist, das gengegenüber der Salzschmelze korrosionsfest und wegen seiner durchgehenden Poren für die Salzschmelze durchlässig ist und, gegenüber dem Diffusionsstrom von für die Austauschbehandlung schädlichen Substanzen jedoch einen hohen Widerstand aufweist. Es wird eine Spannung über die Anode und Kathode für den Fluss von elektrischem Strom angelegt, wodurch ein Teil der in der Kammer enthaltenen und mit den schädlichen Substanzen angereicherten Salzschmelze intermittierend oder kontinuierlich abgezogen wird.

Es ist eine Aufgabe der vorliegenden Erfindung, eine Möglichkeit anzugeben, die Verwendbarkeit einer Salzschmelze, die Kaliumnitrat beinhaltet oder aus Kaliumnitrat besteht und die zum Härten und/oder Verfestigen von Glas dient, dauerhaft aufrecht zu erhalten oder zumindest zu verlängern.

Die Aufgabe wird durch die Verwendung von kaliumhaltigem Silikatglas als Regenerationsmaterial gelöst, das aus einem Rohmaterialgemisch erschmolzen ist, das einen Anteil an Kaliumoxid im Bereich von 20 Massenprozent bis 40 Massenprozent, insbesondere im Bereich von 25 Massenprozent bis 35 Massenprozent, oder von 32,5 Massenprozent, aufweist.

Es ist eine weitere Aufgabe der vorliegenden Erfindung, eine Anlage der eingangs genannten Art anzugeben, die das Härten und/oder Verfestigen einer besonders großen Anzahl von Glasgegenständen erlaubt, ohne die Salzschmelze austauschen zu müssen.

Diese weitere Aufgabe wird durch eine Anlage gemäß Anspruch 9 gelöst.

Es ist eine weitere Aufgabe der vorliegenden Erfindung, ein Verfahren anzugeben, das das Härten und/oder Verfestigen einer besonders großen Anzahl von Glasgegenständen erlaubt, ohne die Salzschmelze austauschen zu müssen.

Diese weitere Aufgabe wird durch ein Verfahren gelöst, das dadurch gekennzeichnet ist, dass das zu härtende und/oder zu verfestigende Glas in eine Salzschmelze, die Kaliumnitrat beinhaltet oder aus Kaliumnitrat besteht, eingetaucht wird und dass die Salzschmelze fortlaufend oder in zeitlich beabstandeten Intervallen mit einem erfindungsgemäßen Regenerationsmaterial in Kontakt gebracht wird, das aus einem Rohmaterialgemisch erschmolzen ist, das aus einem Rohmaterialgemisch erschmolzen ist, das einen Anteil an Kaliumoxid im Bereich von 20 Massenprozent bis 40 Massenprozent, insbesondere im Bereich von 25 Massenprozent bis 35 Massenprozent, oder von 32,5 Massenprozent, aufweist.

Die Erfindung hat den ganz besonderen Vorteil, dass drei ganz wesentliche Alterserscheinungen einer Salzschmelze vermieden oder wenigstens sehr wesentlich hinausgezögert werden können. Insbesondere wird ein Anstieg der Konzentration von Fremdalkaiionen vermieden oder wenigstens sehr wesentlich hinausgezögert. Außerdem wird ein pH-Wert-Anstieg der Salzschmelze durch Salzzersetzung vermieden oder wenigstens sehr wesentlich hinausgezögert. Darüber hinaus werden partikelförmige Verunreinigungen vermieden; dies insbesondere dadurch, dass partikelförmige Verunreinigungen der Salzschmelze gebunden werden, sobald sie innerhalb der Salzschmelze mit dem Regenerationsmaterial in Kontakt kommen.

Das Regenerationsmaterial kann ganz besonders vorteilhaft in einer Salzschmelze verwendet werden, die eine Temperatur von weniger als 495 Grad Celsius, insbesondere von weniger als 480 Grad Celsius, aufweist oder die eine Temperatur von 440 Grad Celsius aufweist. Bei einer solchen Temperatur findet ein effizienter Ionenaustausch der Salzschmelze sowohl mit dem erfindungsgemäßen Regenerationsmaterial als auch mit den in der Salzschmelze zu verfestigenden und/oder zu härtenden Glasgegenständen statt. Dies insbesondere, wenn die Glasgegenstände aus alkalihaltigem Silikatglas, insbesondere aus Alkali-Erdalkali-Silikatglas, ganz insbesondere aus Kalk-Natron-Glas, oder aus Borosilikatglas, oder aus Alumosilikatglas, gefertigt sind.

Außerdem hat das erfindungsgemäße Regenerationsmaterial keine negativen Auswirkungen auf eine Anlage zum Härten und/oder Verfestigen von Glasgegenständen. Das erfindungsgemäße Regenerationsmaterial verursacht insbesondere keine korrosiven Reaktionen mit den zu härtenden und/oder zu verfestigenden Glasgegenständen oder mit dem Salzbad. Darüber hinaus ist das Einbringen des Regerationsmaterials in das Salzbad und das Wieder-Entfernen des Regerationsmaterials aus dem Salzbad einfach und unkompliziert möglich, da es als Festkörper (beispielsweise in Form von Kugeln, Granulat, Platten, gewellten Platten, unregelmäßig gewellten Platten, Platten mit unregelmäßiger Oberfläche oder Glasfasern oder als Vlies oder Glasfritten oder Sintermaterial) mit der Salzschmelze in Kontakt gebracht wird. Insbesondere kann das Regerationsmaterial einfach und unkompliziert in eine Salzschmelze eingeführt und wieder aus der Salzschmelze entfernt werden (hierzu unten mehr).

Das erfindungsgemäße Regenerationsmaterial beinhaltet vorteilhafter Weise keine schädlichen Stoffe oder Verbindungen. Insbesondere ist das erfindungsgemäße Regenerationsmaterial weder toxisch noch umweltgefährlich.

Insbesondere da es sich bei dem Regenerationsmaterial um ein Glas handelt, besteht vorteilhafter Weise eine vollständige Recyclingfähigkeit. Insbesondere kann das Regenerationsmaterial nach seiner erfindungsgemäßen Verwendung als Rohstoff für andere Anwendungen oder als Rohstoff zur Herstellung von Glasgegenständen verwendet werden. Beispielsweise kann das Regenerationsmaterial nach seiner erfindungsgemäßen Verwendung von noch anhaftendem Salz gereinigt und als Rohstoff für die Herstellung von silikatischen Massengläsern verwendet werden.

Die Erfindung hat außerdem den besonderen Vorteil, dass eine Anwendung unabhängig von der Form oder Größe oder Art der zu härtenden Glasgegenstände einsetzbar ist. Insbesondere ist auch die Art des eingesetzten Verfahrens zum Härten und/oder Verfestigen unerheblich. Insbesondere ist die Verwendbarkeit beim Härten und/oder Verfestigen von Gebrauchsglas ebenso möglich, wie beim Härten und/oder Verfestigen von Spezialgläsern. Insbesondere ist auch eine Anwendung beim Ionenaustausch von optischen Spezialgläsern, beispielsweise für IR-Polarisatoren, möglich.

Insbesondere ist es auch unerheblich, wie die regenerierte Salzschmelze mit den zu härtenden und/oder zu verfestigenden Glasgegenständen in Kontakt kommt. Insbesondere ist ein Eintauchen in ein Salzbad, das die Salzschmelze beinhaltet, ebenso möglich, wie ein berieseln oder besprühen der zu härtenden und/oder zu verfestigenden Glasgegenstände.

Das Regenerationsmaterial kann insbesondere aus einem Rohmaterialgemisch erschmolzen sein, das außer Kaliumoxid zusätzlich wenigstens ein weiteres Oxid, insbesondere aus der Gruppe: Aluminiumoxid, Boroxid, Schwefeloxid, Calciumoxid, beinhaltet. Insbesondere kann vorteilhaft vorgesehen sein, dass das Regenerationsmaterial aus einem Rohmaterialgemisch erschmolzen ist, das außer Kaliumoxid zusätzlich mehrere Oxide, insbesondere aus der Gruppe: Aluminiumoxid, Boroxid, Schwefeloxid, Calciumoxid, in gleichen oder unterschiedlichen Anteilen beinhaltet.

Ganz besonders vorteilhaft und wirkungsvoll ist ein Regenerationsmaterial der oben genannten Art, das aus einem Rohmaterialgemisch erschmolzen ist, das einen Anteil an Siliciumoxid im Bereich von 40 Massenprozent bis 75 Massenprozent, insbesondere im Bereich von 50 Massenprozent bis 65 Massenprozent, oder von 57,5 Massenprozent, aufweist.

Erfindungsgemäß ist das Regenerationsmaterial aus einem Rohmaterialgemisch erschmolzen, das einen Anteil an Kaliumoxid im Bereich von 20 Massenprozent bis 40 Massenprozent, insbesondere im Bereich von 25 Massenprozent bis 35 Massenprozent, oder von 32,5 Massenprozent, aufweist. Es hat sich gezeigt, dass dieser Bereich ganz besonders vorteilhaft für eine effiziente Funktionsfähigkeit des Regenerationsmaterials ist. Dies ist insbesondere darauf zurückzuführen ist, dass der Ionenaustausch, bei dem das für eine Regeneration der Salzschmelze wichtige Kalium abgegeben wird, auf Grund der bei diesem Anteil an Kaliumoxid vorliegenden besonderen Beschaffenheit des Glasnetzwerks des Regenerationsmaterials ganz besonders gut funktioniert. Insbesondere bei Verwendung eines Rohmaterialgemisches mit einem Anteil an Kaliumoxid von über 40 Massenprozent zum Erschmelzen des Regenerationsmaterials ist die Funktionsfähigkeit des resultierenden Regenerationsmaterials ganz erheblich herabgesetzt, obwohl in dem Regenerationsmaterial mehr Kalium vorhanden ist. Bei Verwendung eines Rohmaterialgemisches mit einem Anteil an Kaliumoxid von unter 20 Massenprozent wird Kalium von dem Regenerationsmaterial nur sehr langsam an die Salzschmelze abgegeben.

Außerdem kann alternativ oder zusätzlich vorteilhaft vorgesehen sein, dass das Regenerationsmaterial aus einem Rohmaterialgemisch erschmolzen ist, das einen Anteil an Aluminiumoxid im Bereich von 1 Massenprozent bis 10 Massenprozent, insbesondere im Bereich von 2 Massenprozent bis 6 Massenprozent, oder von 2,5 Massenprozent oder von 5 Massenprozent aufweist.

Darüber hinaus kann alternativ oder zusätzlich vorteilhaft vorgesehen sein, dass das Regenerationsmaterial aus einem Rohmaterialgemisch erschmolzen ist, das einen Anteil an Calciumoxid im Bereich von 0 Massenprozent bis 15 Massenprozent, insbesondere im Bereich von 6 Massenprozent bis 10 Massenprozent, oder von 8 Massenprozent, aufweist.

Des Weiteren kann alternativ oder zusätzlich vorteilhaft vorgesehen sein, dass das Regenerationsmaterial aus einem Rohmaterialgemisch erschmolzen ist, das einen Anteil an Boroxid im Bereich von 0 Massenprozent bis 10 Massenprozent aufweist.

Insbesondere ist eine Ausführung besonders vorteilhaft, bei der das Regenerationsmaterial wenigstens ein Erdalkalimetall enthält.

Beispielsweise kann Regenerationsmaterial aus einem Rohmaterialgemisch erschmolzen sein, das 2,5 Massenprozent Aluminiumoxid, 32 Massenprozent Kaliumoxid, 8 Massenprozent Calciumoxid sowie 57,5 Massenprozent Siliciumoxid beinhaltet. Es hat sich gezeigt, dass mit einem solchen Regenerationsmaterial, das mit einem Massenanteil von 5 % in ein verunreinigtes Salzschmelze-Bad eingeführt wird, eine Senkung des Ausgangsnatriumgehalts um 60 % und mehr innerhalb von 24 Stunden erzielt werden kann.

Beispielsweise kann Regenerationsmaterial aus einem Rohmaterialgemisch erschmolzen sein, das 5 Massenprozent Aluminiumoxid, 32,5 Massenprozent Kaliumoxid, 8 Massenprozent Calciumoxid sowie 54,5 Massenprozent Siliciumoxid beinhaltet. Es hat sich gezeigt, dass ein solches Regenerationsmaterial, besonders gut in Form eines Vlieses in einem separaten Kanal zum Einsatz kommen kann, der von der zu regenerierenden Salzschmelze fortlaufend oder in zeitlich beanstandeten Intervallen durchströmt wird.

Ganz allgemein kann vorteilhaft vorgesehen sein, dass das Regenerationsmaterial fortlaufend oder in zeitlich beabstandeten Intervallen mit der Salzschmelze in Kontakt gebracht wird. Dies kann beispielsweise dadurch erfolgen, dass das Regenerationsmaterial in ein Bad oder in einen Behälter eingebracht wird, in dem sich die zu regenerierende Salzschmelze befindet. Besonders wirkungsvoll ist das Regenerationsmaterial, wenn das Regenerationsmaterial und die Salzschmelze relativ zueinander bewegt werden. Die erfindungsgemäße Anlage kann insoweit vorteilhaft eine Bewegevorrichtung aufweisen, die das Regenerationsmaterial fortlaufend oder in zeitlich beabstandeten Intervallen, in der Salzschmelze bewegt und/oder in die Salzschmelze bewegt.

Alternativ kann auch vorgesehen sein, dass das Regenerationsmaterial in einem separaten Kanal angeordnet wird, die von der zu regenerierenden Salzschmelze fortlaufend oder in zeitlich beabstandeten Intervallen durchströmt wird. Die erfindungsgemäße Anlage kann insoweit vorteilhaft eine Pumpe zum Pumpen der Salzschmelze durch den Kanal aufweisen. Vorzugsweise ist der Kanal aktiv beheizt, um einen Temperaturabfall der Salzschmelze innerhalb des Kanals und damit ein Erstarren der Salzschmelze in dem Kanal zu vermeiden.

Das Regenerationsmaterial kann vorteilhaft beispielsweise in Form eines Granulats mit der Salzschmelze in Kontakt gebracht werden. Insbesondere kann vorteilhaft vorgesehen sein, dass das Granulat eine Korngröße im Bereich von 0,1 mm bis 0,8 mm, insbesondere im Bereich von 0,3 mm bis 0,8 mm, aufweist. Eine solche Korngröße bietet einerseits den Vorteil, dass das Granulat in einem Behälter mit vergleichsweise großen Öffnungen gehalten werden kann, während es gleichzeitig eine große Kontaktoberfläche für die Salzschmelze bietet.

Alternativ kann das Regenerationsmaterial, wenigstens teilweise, vorteilhaft in Form von Glasfritten oder Sintermaterial vorliegen. Auch eine solche Ausführung bietet einerseits den Vorteil, dass Regenerationsmaterial in einem Behälter mit vergleichsweise großen Öffnungen gehalten werden kann, während es gleichzeitig eine große Kontaktoberfläche für die Salzschmelze bietet. Die Glasfritten können eine Dicke im Bereich von 0,1 mm bis 0, 8 mm, insbesondere im Bereich von 0,3 mm bis 0,8 mm, aufweisen.

Alternativ und mit denselben Vorteilen ist es auch möglich, dass das Regenerationsmaterial, wenigstens teilweise, zu Platten ausgewalzt ist und dass die Platten oder Bruchstücke der Platten mit der Salzschmelze in Kontakt gebracht werden. Die Platten oder die Bruchstücke der Platten können vorteilhaft eine Dicke im Bereich von 0,1 mm bis 0,8 mm, insbesondere im Bereich von 0,3 mm bis 0,8 mm, aufweisen.

Die Platten können vorteilhaft gewellt sein oder unregelmäßig gewellt sein. Ganz allgemein kann vorteilhaft vorgesehen sein, dass die Platten eine unregelmäßige Oberfläche aufweisen. Auf diese Weise wird vorteilhaft verhindert, dass die Platten aneinander anhaften.

Alternativ und mit denselben Vorteilen ist es auch möglich, dass das Regenerationsmaterial, wenigstens teilweise, in Form von Glasfasern oder in Form wenigstens eines aus Glasfasern hergestellten Vlieses oder in Form von Glaswolle mit der Salzschmelze in Kontakt gebracht wird.

Das Regenerationsmaterial kann unmittelbar in die Salzschmelze eingebracht werden. Alternativ kann ein Behälter, der das Regenerationsmaterial beinhaltet, in die Salzschmelze eingebracht werden, wobei der Behälter wenigstens eine Öffnung aufweist, durch die das geschmolzene Salz der Salzschmelze strömen kann, ohne dass das Regenerationsmaterial aus dem Behälter entweichen kann. Eine solche Ausführung hat den besonderen Vorteil, dass Partikel des Regenerationsmaterials, beispielsweise Granulatpartikel oder Glasfritten, sich nicht unkontrolliert in der Salzschmelze verteilen.

Der Behälter kann beispielsweise als Käfig, als Korb oder als Sieb ausgebildet sein. Vorzugsweise ist der der Behälter aus Edelstahl gefertigt. Auf diese Weise ist eine chemische Reaktion mit der Salzschmelze oder dem regenerationsmaterial oder den zu härtenden und/oder zu verfestigenden Glasgegenständen vermieden.

Wie bereits erwähnt, kann vorteilhaft vorgesehen sein, dass das Regenerationsmaterial, insbesondere fortlaufend oder in zeitlich beabstandeten Intervallen, in der Salzschmelze bewegt wird, um ständig andere Teile der Salzschmelze mit dem Regenerationsmaterial in Kontakt zu bringen. Es ist alternativ oder zusätzlich auch möglich, dass fortlaufend oder in zeitlich beanstandeten Intervallen jeweils ein Teil der Salzschmelze einem Salzbad, in dem der Glashärtungs- und/oder Glasverfestigungsprozess stattfindet, entnommen und mit dem Regenerationsmaterial in Kontakt, insbesondere in strömenden Kontakt, gebracht wird, wobei der jeweils entnommene Teil der Salzschmelze anschließend wieder in das Salzbad eingefüllt wird.

Im Hinblick auf das erfindungsgemäße Verfahren zum Härten und/oder Verfestigen von Glasgegenständen, insbesondere von Glasgegenständen aus Gebrauchsglas, kommt es durch die Verwendung des Regenerationsmaterials zu keinem nachteiligen Einfluss auf die zu behandelnden Glasgegenstände. Insoweit können die Glasgegenstände nach dem Ionenaustauschprozess einfach der Salzschmelze entnommen und von anhaftendem Kaliumnitrat gereinigt werden. Bei den Glasgegenständen kann es sich insbesondere um Behälter oder um Flachglas handeln.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel einer erfindungsgemäßen Anlage zum Härten und/oder Verfestigen von Glas, und
- Fig. 2: ein weiteres Ausführungsbeispiel einer erfindungsgemäßen Anlage zum Härten und/oder Verfestigen von Glas.

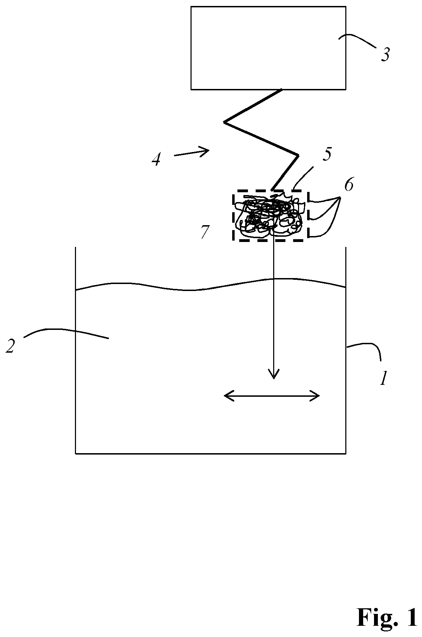

Figur 1 zeigt ein Ausführungsbeispiel einer erfindungsgemäßen Anlage zum Härten und/oder Verfestigen von Glas, die ein Salzbad 1 mit einer Salzschmelze 2 aufweist. Die Salzschmelze 2 beinhaltet Kaliumnitrat oder besteht aus Kaliumnitrat.

Die Anlage weist außerdem eine Bewegevorrichtung 3 mit einem Roboterarm 4 auf, der einen Behälter 5 trägt. Der Behälter 5 weist Öffnungen 6 auf, durch die die Salzschmelze 2 strömen kann. Innerhalb des Behälters 5 ist ein Regenerationsmaterial 7 angeordnet. Die Öffnungen 6 des Behälters 5 sind so bemessen, dass das Regenerationsmaterial 7 nicht hindurch gelangen kann. Allerdings kann die Salzschmelze 2 durch die Öffnungen 6 strömen.

Das Regenerationsmaterial 7 beinhaltet ein kaliumhaltiges Silikatglas oder besteht aus einem kaliumhaltigen Silikatglas.

Mittels der Bewegevorrichtung 3 wird der Behälter 5 mit dem Regenerationsmaterial 7 in die Salzschmelze 2 eingetaucht. Die Bewegevorrichtung 3 bewegt außerdem den Behälter 5 mit dem Regenerationsmaterial 7 innerhalb der Salzschmelze, was die Wirkung des Regenerationsmaterials 7 erhöht.

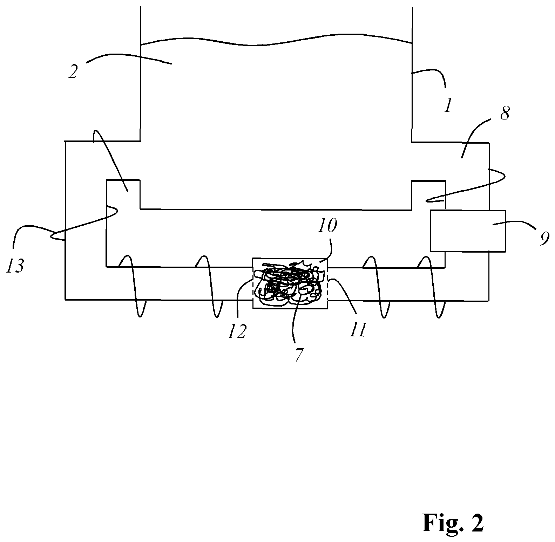

Figur 2 zeigt ein weiteres Ausführungsbeispiel einer erfindungsgemäßen Anlage zum Härten und/oder Verfestigen von Glas, die ein Salzbad 1 mit einer Salzschmelze 2 aufweist. Die Salzschmelze 2 beinhaltet Kaliumnitrat oder besteht aus Kaliumnitrat.

Das Salzbad 1 ist an zwei Stellen an einen Kanal 8 angeschlossen, in dem sich eine Pumpe 9 befindet. Mittels der Pumpe 9 wird jeweils ein Teil der Salzschmelze 2 aus dem Salzbad 1 entnommen und nach Durchlaufen des Kanals und des im Kanal 8 befindlichen Regenerationsmaterials 7 wieder dem Salzbad 1 zugeführt.

Der Kanal 8 wird mittels eines Heizdrahtes 13 aktiv beheizt, um einen Temperaturabfall der Salzschmelze 2 innerhalb des Kanals 8 und damit ein Erstarren der Salzschmelze 2 in dem Kanal 8 zu vermeiden.

Innerhalb des Kanals 8 befindet sich eine Kammer 10, die eine mit einem ersten Gitter 11 verschlossene Eingangsöffnung und eine mit einem zweiten Gitter 12 verschlossene Ausgangsöffnung aufweist. Die Gitter 11, 12 sind so bemessen, dass die Salzschmelze 2 hindurch strömen kann, jedoch das Regenerationsmaterial 7 nicht hindurch gelangen kann.

### Bezugszeichenliste:

- 1: Salzbad
- 2: Salzschmelze
- 3: Bewegevorrichtung
- 4: Roboterarm
- 5: Behälter
- 6: Öffnungen
- 7: Regenerationsmaterial
- 8: Kanal
- 9: Pumpe
- 10: Kammer
- 11: erstes Gitter
- 12: zweites Gitter
- 13: Heizdraht

## Patentansprüche

1. Verwendung von kaliumhaltigem Silikatglas als Regenerationsmaterial (7), das aus einem Rohmaterialgemisch erschmolzen ist, das einen Anteil an Kaliumoxid im Bereich von 20 Massenprozent bis 40 Massenprozent, insbesondere im Bereich von 25 Massenprozent bis 35 Massenprozent, oder von 32,5 Massenprozent, aufweist, zum Regenerieren einer für einen Glashärtungs- und/oder Glasverfestigungsprozess eingesetzten Salzschmelze (2), die Kaliumnitrat beinhaltet oder aus Kaliumnitrat besteht.

2. Verwendung nach Anspruch 1, **dadurch gekennzeichnet, dass** das Regenerationsmaterial (7) wenigstens eines der nachfolgend genannten Merkmale a bis h aufweist:
a. das Regenerationsmaterial (7) ist aus einem Rohmaterialgemisch erschmolzen, das außer Kaliumoxid zusätzlich wenigstens ein weiteres Oxid, insbesondere aus der Gruppe: Aluminiumoxid, Boroxid, Schwefeloxid, Calciumoxid, beinhaltet,
b. das Regenerationsmaterial (7) ist aus einem Rohmaterialgemisch erschmolzen, das außer Kaliumoxid zusätzlich mehrere Oxide, insbesondere aus der Gruppe: Aluminiumoxid, Boroxid, Schwefeloxid, Calciumoxid, beinhaltet,
c. das Regenerationsmaterial (7) ist aus einem Rohmaterialgemisch erschmolzen ist, das außer Kaliumoxid zusätzlich mehrere Oxide, insbesondere aus der Gruppe: Aluminiumoxid, Boroxid, Schwefeloxid, Calciumoxid, in unterschiedlichen Anteilen beinhaltet,
d. das Regenerationsmaterial (7) ist aus einem Rohmaterialgemisch erschmolzen, das einen Anteil an Siliciumoxid im Bereich von 40 Massenprozent bis 75 Massenprozent, insbesondere im Bereich von 50 Massenprozent bis 65 Massenprozent, oder von 57,5 Massenprozent, aufweist,
e. das Regenerationsmaterial (7) ist aus einem Rohmaterialgemisch erschmolzen, das einen Anteil an Aluminiumoxid im Bereich von 1 Massenprozent bis 10 Massenprozent, insbesondere im Bereich von 2 Massenprozent bis 6 Massenprozent, oder von 2,5 Massenprozent oder von 5 Massenprozent aufweist,
f. das Regenerationsmaterial (7) ist aus einem Rohmaterialgemisch erschmolzen, das einen Anteil an Calciumoxid im Bereich von 0 Massenprozent bis 15 Massenprozent, insbesondere im Bereich von 6 Massenprozent bis 10 Massenprozent, oder von 8 Massenprozent, aufweist,
g. das Regenerationsmaterial (7) ist aus einem Rohmaterialgemisch erschmolzen, das einen Anteil an Boroxid im Bereich von 0 Massenprozent bis 10 Massenprozent aufweist,
h. das Regenerationsmaterial (7) enthält wenigstens ein Erdalkalimetall.

3. Verwendung nach Anspruch 1 oder 2, **dadurch gekennzeichnet, dass**
a. das Regenerationsmaterial (7) fortlaufend oder in zeitlich beabstandeten Intervallen mit der Salzschmelze (2) in Kontakt gebracht wird, und/oder dass
b. das Regenerationsmaterial (7), insbesondere fortlaufend oder in zeitlich beabstandeten Intervallen, in der Salzschmelze (2) bewegt wird.

4. Verwendung nach einem der Ansprüche 1 bis 3, **dadurch gekennzeichnet, dass**
a. das Regenerationsmaterial (7) in Form eines Granulats, insbesondere eines Granulats, das eine Korngröße im Bereich von 0,3 mm bis 0,8 mm aufweist, mit der Salzschmelze (2) in Kontakt gebracht wird, oder dass
b. das Regenerationsmaterial (7) in Form von Glasfritten, insbesondere Glasfritten, die eine Dicke im Bereich von 0,1 mm bis 0,8 mm aufweisen, oder Sintermaterial mit der Salzschmelze (2) in Kontakt gebracht wird, oder dass
c. das Regenerationsmaterial (7) zu Platten ausgewalzt wird und dass die Platten oder Bruchstücke der Platten mit der Salzschmelze (2) in Kontakt gebracht werden, oder dass
d. das Regenerationsmaterial (7) zu Platten ausgewalzt wird und dass die Platten oder Bruchstücke der Platten mit der Salzschmelze (2) in Kontakt gebracht werden, wobei die Platten oder die Bruchstücke der Platten eine Dicke im Bereich von 0,1 mm bis 0, 8 mm aufweisen, oder dass
e. das Regenerationsmaterial (7) in Form von Glasfasern oder in Form wenigstens eines aus Glasfasern hergestellten Vlieses oder in Form von Glaswolle mit der Salzschmelze (2) in Kontakt gebracht werden.

5. Verwendung nach einem der Ansprüche 1 bis 4, **dadurch gekennzeichnet, dass**
a. das Regenerationsmaterial (7) unmittelbar in die Salzschmelze (2) eingebracht wird, und/oder dass
b. ein Behälter (5), der das Regenerationsmaterial (7) beinhaltet, in die Salzschmelze (2) eingebracht wird, wobei der Behälter (5) wenigstens eine Öffnung (6) aufweist, durch die das geschmolzene Salz der Salzschmelze (2) strömen kann, ohne dass das Regenerationsmaterial (7) aus dem Behälter (5) entweichen kann.

6. Verwendung nach einem der Ansprüche 1 bis 4, **dadurch gekennzeichnet, dass** fortlaufend oder in zeitlich beanstandeten Intervallen jeweils ein Teil der Salzschmelze (2) einem Salzbad (1), in dem der Glashärtungs- und/oder Glasverfestigungsprozess stattfindet, entnommen und mit dem Regenerationsmaterial (7) in, insbesondere in strömenden, Kontakt gebracht wird und dass der Teil der Salzschmelze (2) jeweils anschließend wieder in das Salzbad (1) eingefüllt wird.

7. Verwendung nach einem der Ansprüche 1 bis 6, **dadurch gekennzeichnet, dass** der Teil der Salzschmelze (2) fortlaufend oder in zeitlich beanstandeten Intervallen durch einen Kanal geleitet wird, in dem sich das Regenerationsmaterial (7) befindet.

8. Verfahren zur Herstellung von Glas, insbesondere von Gebrauchsglas, **dadurch gekennzeichnet, dass**
a. bei der Verwendung nach einem der Ansprüche 1 bis 7 verbrauchtes Regenerationsmaterial (7) als Rohstoff für das Glas, verwendet wird, oder dass
b. bei der Verwendung nach einem der Ansprüche 1 bis 7 verbrauchtes Regenerationsmaterial (7) als Rohstoff für das Glas, verwendet wird, wobei das Regenerationsmaterial (7) der Salzschmelze (2) entnommen und von anhaftendem Kaliumnitrat gereinigt wird.

9. Anlage zum Härten und/oder Verfestigen von Glas beinhaltend ein Salzbad (1) mit einer Salzschmelze (2), die Kaliumnitrat beinhaltet oder aus Kaliumnitrat besteht, **dadurch gekennzeichnet, dass** die Anlage ein Regenerationsmaterial (7) aufweist, das aus einem Rohmaterialgemisch erschmolzen ist, das einen Anteil an Kaliumoxid im Bereich von 20 Massenprozent bis 40 Massenprozent, insbesondere im Bereich von 25 Massenprozent bis 35 Massenprozent, oder von 32,5 Massenprozent, aufweist und das fortlaufend mit der Salzschmelze (2) in Kontakt steht oder in zeitlich beabstandeten Intervallen mit der Salzschmelze (2) in Kontakt bringbar ist.

10. Anlage nach Anspruch 9, **dadurch gekennzeichnet, dass**
a. das Regenerationsmaterial (7) unmittelbar in die Salzschmelze (2) eingebracht ist oder einbringbar ist, oder dass
b. die Anlage einen in die Salzschmelze (2) einbringbaren oder eingebrachten Behälter (5), insbesondere einen als Käfig, Korb oder Sieb ausgebildeten Behälter (5), aufweist, der das Regenerationsmaterial (7) beinhaltet, wobei der Behälter (5) wenigstens eine Öffnung (6) aufweist, durch die das geschmolzene Salz der Salzschmelze (2) strömen kann.

11. Anlage nach Anspruch 9 oder 10, **dadurch gekennzeichnet, dass**
a. die Anlage eine Bewegevorrichtung (3) aufweist, die das Regenerationsmaterial (7) fortlaufend oder in zeitlich beabstandeten Intervallen, in der Salzschmelze (2) bewegt und/oder in die Salzschmelze (2) bewegt, und/oder dass
b. die Anlage einen Kanal (8) aufweist, in dem sich das Regenerationsmaterial (7) befindet und durch den fortlaufend oder in zeitlich beanstandeten Intervallen ein Teil der Salzschmelze (2) leitbar ist, und/oder dass
c. die Anlage einen Kanal (8), in dem sich das Regenerationsmaterial (7) befindet und durch den fortlaufend oder in zeitlich beanstandeten Intervallen ein Teil der Salzschmelze (2) leitbar ist, und eine Pumpe (9) zum Pumpen der Salzschmelze (2) durch den Kanal (8) aufweist.

12. Anlage nach einem der Ansprüche 9 bis 11, **dadurch gekennzeichnet, dass** das Regenerationsmaterial (7) wenigstens eines der nachfolgend genannten Merkmale a bis h aufweist:
a. das Regenerationsmaterial (7) ist aus einem Rohmaterialgemisch erschmolzen, das außer Kaliumoxid zusätzlich wenigstens ein weiteres Oxid, insbesondere aus der Gruppe: Aluminiumoxid, Boroxid, Schwefeloxid, Calciumoxid, beinhaltet,
b. das Regenerationsmaterial (7) ist aus einem Rohmaterialgemisch erschmolzen, das außer Kaliumoxid zusätzlich mehrere Oxide, insbesondere aus der Gruppe: Aluminiumoxid, Boroxid, Schwefeloxid, Calciumoxid, beinhaltet,
c. das Regenerationsmaterial (7) ist aus einem Rohmaterialgemisch erschmolzen ist, das außer Kaliumoxid zusätzlich mehrere Oxide, insbesondere aus der Gruppe: Aluminiumoxid, Boroxid, Schwefeloxid, Calciumoxid, in unterschiedlichen Anteilen beinhaltet,
d. das Regenerationsmaterial (7) ist aus einem Rohmaterialgemisch erschmolzen, das einen Anteil an Siliciumoxid im Bereich von 40 Massenprozent bis 75 Massenprozent, insbesondere im Bereich von 50 Massenprozent bis 65 Massenprozent, oder von 57,5 Massenprozent, aufweist,
e. das Regenerationsmaterial (7) ist aus einem Rohmaterialgemisch erschmolzen, das einen Anteil an Aluminiumoxid im Bereich von 1 Massenprozent bis 10 Massenprozent, insbesondere im Bereich von 2 Massenprozent bis 6 Massenprozent, oder von 2,5 Massenprozent oder von 5 Massenprozent aufweist,
f. das Regenerationsmaterial (7) ist aus einem Rohmaterialgemisch erschmolzen, das einen Anteil an Calciumoxid im Bereich von 0 Massenprozent bis 15 Massenprozent, insbesondere im Bereich von 6 Massenprozent bis 10 Massenprozent, oder von 8 Massenprozent, aufweist,
g. das Regenerationsmaterial (7) ist aus einem Rohmaterialgemisch erschmolzen, das einen Anteil an Boroxid im Bereich von 0 Massenprozent bis 10 Massenprozent aufweist,
h. das Regenerationsmaterial (7) enthält wenigstens ein Erdalkalimetall.

13. Anlage nach einem der Ansprüche 9 bis 12, **dadurch gekennzeichnet, dass**
a. das Regenerationsmaterial (7) ein Granulat ist, insbesondere ein Granulat, das Granulat eine Korngröße im Bereich von 0,3 mm bis 0,8 mm aufweist, oder dass
b. das Regenerationsmaterial (7) als Sintermaterial und/oder als Glasfritten, insbesondere als Glasfritten, die eine Dicke im Bereich von 0,1 mm bis 0, 8 mm aufweisen, ausgebildet ist, oder dass
c. das Regenerationsmaterial (7) zu Platten, insbesondere zu Platten, die eine Dicke im Bereich von 0,1 mm bis 0, 8 mm aufweisen, ausgewalzt ist oder dass das Regenerationsmaterial (7) in Form von Plattenbruchstücken ausgebildet ist, oder dass
d. das Regenerationsmaterial (7) in Form von Glasfasern oder in Form wenigstens eines aus Glasfasern hergestellten Vlieses oder in Form von Glaswolle ausgebildet ist.

14. Verfahren zum Härten und/oder Verfestigen von Glasgegenständen, **dadurch gekennzeichnet, dass** das zu härtende und/oder zu verfestigende Glas in eine Salzschmelze (2), die Kaliumnitrat beinhaltet oder aus Kaliumnitrat besteht, eingetaucht wird und dass die Salzschmelze (2) fortlaufend oder in zeitlich beabstandeten Intervallen mit einem Regenerationsmaterial (7) in Kontakt gebracht wird, das aus einem Rohmaterialgemisch erschmolzen ist, das einen Anteil an Kaliumoxid im Bereich von 20 Massenprozent bis 40 Massenprozent, insbesondere im Bereich von 25 Massenprozent bis 35 Massenprozent, oder von 32,5 Massenprozent, aufweist.

15. Verfahren nach Anspruch 14, **dadurch gekennzeichnet, dass** das Regenerationsmaterial (7) wenigstens eines der Merkmale a bis h des Anspruchs 12 und/oder wenigstens eines der Merkmale der Merkmale a bis d des Anspruchs 13 aufweist.

## Claims

1. Use of a potassium-containing silicate glass as a regeneration material (7), which is melted from a raw material mixture having a proportion of potassium oxide in the range of 20 mass percent to 40 mass percent, in particular in the range of 25 mass percent to 35 mass percent, or of 32.5 mass percent, for regenerating a salt melt (2) used in a glass tempering and/or glass strengthening process, the salt melt comprising potassium nitrate or consisting of potassium nitrate.

2. Use according to claim 1, **characterized in that** the regeneration material (7) has at least one of the following features a to h:
a. the regeneration material (7) is melted from a raw material mixture which, in addition to potassium oxide, comprises at least one further oxide, in particular selected from the group consisting of aluminium oxide, boron oxide, sulfur oxide and calcium oxide,
b. the regeneration material (7) is melted from a raw material mixture which, in addition to potassium oxide, comprises a plurality of oxides, in particular selected from the group consisting of aluminium oxide, boron oxide, sulfur oxide and calcium oxide,
c. the regeneration material (7) is melted from a raw material mixture which, in addition to potassium oxide, comprises a plurality of oxides, in particular selected from the group consisting of aluminium oxide, boron oxide, sulfur oxide and calcium oxide, in different proportions,
d. the regeneration material (7) is melted from a raw material mixture having a proportion of silicon oxide in the range of 40 mass percent to 75 mass percent, in particular in the range of 50 mass percent to 65 mass percent, or of 57.5 mass percent,
e. the regeneration material (7) is melted from a raw material mixture having a proportion of aluminium oxide in the range of 1 mass percent to 10 mass percent, in particular in the range of 2 mass percent to 6 mass percent, or of 2.5 mass percent or of 5 mass percent,
f. the regeneration material (7) is melted from a raw material mixture having a proportion of calcium oxide in the range of 0 mass percent to 15 mass percent, in particular in the range of 6 mass percent to 10 mass percent, or of 8 mass percent,
g. the regeneration material (7) is melted from a raw material mixture having a proportion of boron oxide in the range of 0 mass percent to 10 mass percent,
h. the regeneration material (7) comprises at least one alkaline earth metal.

3. Use according to claim 1 or 2, **characterized in that**
a. the regeneration material (7) is brought into contact with the salt melt (2) continuously or at temporally spaced intervals, and/or
b. the regeneration material (7), in particular continuously or at temporally spaced intervals, is moved in the salt melt (2).

4. Use according to one of claims 1 to 3, **characterized in that**
a. the regeneration material (7) is brought into contact with the salt melt (2) in the form of granules, in particular granules having a particle size in the range of 0.3 mm to 0.8 mm, or
b. the regeneration material (7) is brought into contact with the salt melt (2) in the form of glass frit, in particular glass frit having a thickness in the range of 0.1 mm to 0.8 mm, or as sintered material, or
c. the regeneration material (7) is rolled into plates and the plates or fragments of the plates are brought into contact with the salt melt (2), or
d. the regeneration material (7) is rolled into plates and the plates or fragments of the plates are brought into contact with the salt melt (2), wherein the plates or the fragments of the plates have a thickness in the range of 0.1 mm to 0.8 mm, or
e. the regeneration material (7) is brought into contact with the salt melt (2) in the form of glass fibres or in the form of a nonwoven produced from glass fibres or in the form of glass wool.

5. Use according to one of claims 1 to 4, **characterized in that**
a. the regeneration material (7) is introduced directly into the salt melt (2), and/or
b. a container (5) containing the regeneration material (7) is introduced into the salt melt (2), wherein the container (5) has at least one opening (6) through which the molten salt of the salt melt (2) can flow without the regeneration material (7) escaping from the container (5).

6. Use according to one of claims 1 to 4, **characterized in that** a portion of the salt melt (2) is continuously or at temporally spaced intervals withdrawn from a salt bath (1), in which the glass tempering and/or glass strengthening process takes place, brought into contact with the regeneration material (7), in particular in flowing contact, and subsequently returned to the salt bath (1).

7. Use according to one of claims 1 to 6, **characterized in that** the portion of the salt melt (2) is continuously or at temporally spaced intervals passed through a channel in which the regeneration material (7) is located.

8. Method for producing glass, in particular utility glass, **characterized in that**
a. spent regeneration material (7) from the use according to one of claims 1 to 7 is used as a raw material for the glass, or
b. spent regeneration material (7) from the use according to one of claims 1 to 7 is used as a raw material for the glass, wherein the regeneration material (7) is removed from the salt melt (2) and cleaned of adhering potassium nitrate.

9. Installation for tempering and/or strengthening glass, comprising a salt bath (1) with a salt melt (2) comprising potassium nitrate or consisting of potassium nitrate, **characterized in that** the installation comprises a regeneration material (7) which is melted from a raw material mixture having a proportion of potassium oxide in the range of 20 mass percent to 40 mass percent, in particular in the range of 25 mass percent to 35 mass percent, or of 32.5 mass percent, and which is in continuous contact with the salt melt (2) or can be brought into contact with the salt melt (2) at temporally spaced intervals.

10. Installation according to claim 9, **characterized in that**
a. the regeneration material (7) is introduced into the salt melt (2) or is introducible into the salt melt (2), or
b. the installation comprises a container (5), in particular a container (5) designed as a cage, basket or sieve, which is introducible into or introduced into the salt melt (2), the container containing the regeneration material (7), wherein the container (5) has at least one opening (6) through which the molten salt of the salt melt (2) can flow.

11. Installation according to claim 9 or 10, **characterized in that**
a. the installation comprises a moving device (3) which moves the regeneration material (7) continuously or at temporally spaced intervals in the salt melt (2) and/or into the salt melt (2), and/or
b. the installation comprises a channel (8) in which the regeneration material (7) is located and through which a portion of the salt melt (2) is conductible continuously or at temporally spaced intervals, and/or
c. the installation comprises a channel (8), in which the regeneration material (7) is located and through which a portion of the salt melt (2) is conductible continuously or at temporally spaced intervals, and a pump (9) which pumps the salt melt (2) through the channel (8).

12. Installation according to one of claims 9 to 11, **characterized in that** the regeneration material (7) has at least one of the following features a to h:
a. the regeneration material (7) is melted from a raw material mixture which, in addition to potassium oxide, comprises at least one further oxide, in particular selected from the group consisting of aluminium oxide, boron oxide, sulfur oxide and calcium oxide,
b. the regeneration material (7) is melted from a raw material mixture which, in addition to potassium oxide, comprises a plurality of oxides, in particular selected from the group consisting of aluminium oxide, boron oxide, sulfur oxide and calcium oxide,
c. the regeneration material (7) is melted from a raw material mixture which, in addition to potassium oxide, comprises a plurality of oxides, in particular selected from the group consisting of aluminium oxide, boron oxide, sulfur oxide and calcium oxide, in different proportions,
d. the regeneration material (7) is melted from a raw material mixture having a proportion of silicon oxide in the range of 40 mass percent to 75 mass percent, in particular in the range of 50 mass percent to 65 mass percent, or of 57.5 mass percent,
e. the regeneration material (7) is melted from a raw material mixture having a proportion of aluminium oxide in the range of 1 mass percent to 10 mass percent, in particular in the range of 2 mass percent to 6 mass percent, or of 2.5 mass percent or of 5 mass percent,
f. the regeneration material (7) is melted from a raw material mixture having a proportion of calcium oxide in the range of 0 mass percent to 15 mass percent, in particular in the range of 6 mass percent to 10 mass percent, or of 8 mass percent,
g. the regeneration material (7) is melted from a raw material mixture having a proportion of boron oxide in the range of 0 mass percent to 10 mass percent,
h. the regeneration material (7) comprises at least one alkaline earth metal.

13. Installation according to one of claims 9 to 12, **characterized in that**
a. the regeneration material (7) is a granulate, in particular a granulate having a particle size in the range of 0.3 mm to 0.8 mm, or
b. the regeneration material (7) is formed as sintered material and/or as glass frit, in particular glass frit having a thickness in the range of 0.1 mm to 0.8 mm, or
c. the regeneration material (7) is rolled into plates, in particular plates having a thickness in the range of 0.1 mm to 0.8 mm, or is formed as plate fragments, or
d. the regeneration material (7) is formed in the form of glass fibres or in the form of a nonwoven produced from glass fibres or in the form of glass wool.

14. Method for tempering and/or strengthening glass articles, **characterized in that** the glass to be tempered and/or strengthened is immersed in a salt melt (2) comprising potassium nitrate or consisting of potassium nitrate, and **in that** the salt melt (2) is brought into contact continuously or at temporally spaced intervals with a regeneration material (7) which is melted from a raw material mixture having a proportion of potassium oxide in the range of 20 mass percent to 40 mass percent, in particular in the range of 25 mass percent to 35 mass percent, or of 32.5 mass percent.

15. Method according to claim 14, **characterized in that** the regeneration material (7) has at least one of the features a to h of claim 12 and/or at least one of the features a to d of claim 13.

## Revendications

1. Utilisation d'un verre silicaté contenant du potassium en tant que matériau de régénération (7), fondu à partir d'un mélange de matières premières présentant une proportion d'oxyde de potassium comprise entre 20 pour cent en masse et 40 pour cent en masse, en particulier comprise entre 25 pour cent en masse et 35 pour cent en masse, ou de 32,5 pour cent en masse, pour régénérer un sel fondu (2) utilisé dans un procédé de trempe et/ou de renforcement du verre, le sel fondu comprenant du nitrate de potassium ou étant constitué de nitrate de potassium.

2. Utilisation selon la revendication 1, **caractérisée en ce que** le matériau de régénération (7) présente au moins l'une des caractéristiques suivantes a à h :
a. le matériau de régénération (7) est fondu à partir d'un mélange de matières premières qui, en plus de l'oxyde de potassium, comprend au moins un autre oxyde, notamment choisi dans le groupe constitué par l'oxyde d'aluminium, l'oxyde de bore, l'oxyde de soufre et l'oxyde de calcium,
b. le matériau de régénération (7) est fondu à partir d'un mélange de matières premières qui, en plus de l'oxyde de potassium, comprend plusieurs oxydes, notamment choisis dans le groupe constitué par l'oxyde d'aluminium, l'oxyde de bore, l'oxyde de soufre et l'oxyde de calcium,
c. le matériau de régénération (7) est fondu à partir d'un mélange de matières premières qui, en plus de l'oxyde de potassium, comprend plusieurs oxydes, notamment choisis dans le groupe constitué par l'oxyde d'aluminium, l'oxyde de bore, l'oxyde de soufre et l'oxyde de calcium, en proportions différentes,
d. le matériau de régénération (7) est fondu à partir d'un mélange de matières premières présentant une proportion de dioxyde de silicium comprise entre 40 pour cent en masse et 75 pour cent en masse, en particulier comprise entre 50 pour cent en masse et 65 pour cent en masse, ou de 57,5 pour cent en masse,
e. le matériau de régénération (7) est fondu à partir d'un mélange de matières premières présentant une proportion d'oxyde d'aluminium comprise entre 1 pour cent en masse et 10 pour cent en masse, en particulier comprise entre 2 pour cent en masse et 6 pour cent en masse, ou de 2,5 pour cent en masse ou de 5 pour cent en masse,
f. le matériau de régénération (7) est fondu à partir d'un mélange de matières premières présentant une proportion d'oxyde de calcium comprise entre 0 pour cent en masse et 15 pour cent en masse, en particulier comprise entre 6 pour cent en masse et 10 pour cent en masse, ou de 8 pour cent en masse,
g. le matériau de régénération (7) est fondu à partir d'un mélange de matières premières présentant une proportion d'oxyde de bore comprise entre 0 pour cent en masse et 10 pour cent en masse,
h. le matériau de régénération (7) comprend au moins un métal alcalino-terreux.

3. Utilisation selon la revendication 1 ou 2, **caractérisée en ce que**
a. le matériau de régénération (7) est mis en contact avec le sel fondu (2) de manière continue ou à des intervalles espacés dans le temps, et/ou
b. le matériau de régénération (7), en particulier de manière continue ou à des intervalles espacés dans le temps, est déplacé dans le sel fondu (2).

4. Utilisation selon l'une des revendications 1 à 3, **caractérisée en ce que**
a. le matériau de régénération (7) est mis en contact avec le sel fondu (2) sous forme de granulés, en particulier de granulés présentant une taille de grain comprise entre 0,3 mm et 0,8 mm, ou
b. le matériau de régénération (7) est mis en contact avec le sel fondu (2) sous forme de frittes de verre, en particulier de frittes de verre présentant une épaisseur comprise entre 0,1 mm et 0,8 mm, ou sous forme de matériau fritté,
c. le matériau de régénération (7) est laminé en plaques et les plaques ou des fragments de celles-ci sont mis en contact avec le sel fondu (2), ou
d. le matériau de régénération (7) est laminé en plaques et les plaques ou des fragments de celles-ci sont mis en contact avec le sel fondu (2), les plaques ou les fragments de plaques présentant une épaisseur comprise entre 0,1 mm et 0,8 mm, ou
e. le matériau de régénération (7) est mis en contact avec le sel fondu (2) sous forme de fibres de verre, sous forme d'au moins un non-tissé réalisé à partir de fibres de verre ou sous forme de laine de verre.

5. Utilisation selon l'une des revendications 1 à 4, **caractérisée en ce que**
a. le matériau de régénération (7) est introduit directement dans le sel fondu (2), et/ou
b. un récipient (5) qui comprend le matériau de régénération (7) est introduit dans le sel fondu (2), le récipient (5) présentant au moins une ouverture (6) à travers laquelle le sel fondu peut s'écouler sans que le matériau de régénération (7) ne puisse s'échapper du récipient (5).

6. Utilisation selon l'une des revendications 1 à 4, **caractérisée en ce qu'**une partie du sel fondu (2) est, de manière continue ou à des intervalles espacés dans le temps, prélevée d'un bain de sel (1), dans lequel a lieu le procédé de trempe et/ou de renforcement du verre, mise en contact avec le matériau de régénération (7), en particulier en écoulement, puis réintroduite dans le bain de sel (1).

7. Utilisation selon l'une des revendications 1 à 6, **caractérisée en ce que** la partie du sel fondu (2) est, de manière continue ou à des intervalles espacés dans le temps, conduite à travers un canal dans lequel se trouve le matériau de régénération (7).

8. Procédé de fabrication de verre, en particulier de verre d'usage, **caractérisé en ce que**
a. du matériau de régénération (7) usé issu de l'utilisation selon l'une des revendications 1 à 7 est utilisé comme matière première pour le verre, ou
b. du matériau de régénération (7) usé issu de l'utilisation selon l'une des revendications 1 à 7 est utilisé comme matière première pour le verre, le matériau de régénération (7) étant retiré du sel fondu (2) et nettoyé du nitrate de potassium adhérent.

9. Installation pour la trempe et/ou le renforcement du verre, comprenant un bain de sel (1) avec un sel fondu (2) comprenant du nitrate de potassium ou constitué de nitrate de potassium, **caractérisée en ce que** l'installation comprend un matériau de régénération (7) qui est fondu à partir d'un mélange de matières premières présentant une proportion d'oxyde de potassium comprise entre 20 pour cent en masse et 40 pour cent en masse, en particulier comprise entre 25 pour cent en masse et 35 pour cent en masse, ou de 32,5 pour cent en masse, et qui est en contact continu avec le sel fondu (2) ou peut être mis en contact avec le sel fondu (2) à des intervalles espacés dans le temps.

10. Installation selon la revendication 9, **caractérisée en ce que**
a. le matériau de régénération (7) est introduit dans le sel fondu (2) ou est apte à être introduit dans le sel fondu (2), ou
b. l'installation comprend un récipient (5), en particulier un récipient (5) réalisé sous la forme d'une cage, d'un panier ou d'un tamis, qui est apte à être introduit dans le sel fondu (2) ou qui est introduit dans le sel fondu (2), le récipient (5) comprenant le matériau de régénération (7), le récipient (5) présentant au moins une ouverture (6) à travers laquelle le sel fondu peut s'écouler.

11. Installation selon la revendication 9 ou 10, **caractérisée en ce que**
a. l'installation comprend un dispositif de déplacement (3) qui déplace le matériau de régénération (7) de manière continue ou à des intervalles espacés dans le temps dans le sel fondu (2) et/ou dans le sel fondu (2), et/ou
b. l'installation comprend un canal (8) dans lequel se trouve le matériau de régénération (7) et à travers lequel une partie du sel fondu (2) est susceptible d'être conduite de manière continue ou à des intervalles espacés dans le temps, et/ou
c. l'installation comprend un canal (8) dans lequel se trouve le matériau de régénération (7) et à travers lequel une partie du sel fondu (2) est susceptible d'être conduite de manière continue ou à des intervalles espacés dans le temps, et une pompe (9) qui pompe le sel fondu (2) à travers le canal (8).

12. Installation selon l'une des revendications 9 à 11, **caractérisée en ce que** le matériau de régénération (7) présente au moins l'une des caractéristiques a à h suivantes :
a. le matériau de régénération (7) est fondu à partir d'un mélange de matières premières qui, en plus de l'oxyde de potassium, comprend au moins un autre oxyde, notamment choisi dans le groupe constitué par l'oxyde d'aluminium, l'oxyde de bore, l'oxyde de soufre et l'oxyde de calcium,
b. le matériau de régénération (7) est fondu à partir d'un mélange de matières premières qui, en plus de l'oxyde de potassium, comprend plusieurs oxydes, notamment choisis dans le groupe constitué par l'oxyde d'aluminium, l'oxyde de bore, l'oxyde de soufre et l'oxyde de calcium,
c. le matériau de régénération (7) est fondu à partir d'un mélange de matières premières qui, en plus de l'oxyde de potassium, comprend plusieurs oxydes, notamment choisis dans le groupe constitué par l'oxyde d'aluminium, l'oxyde de bore, l'oxyde de soufre et l'oxyde de calcium, en proportions différentes,
d. le matériau de régénération (7) est fondu à partir d'un mélange de matières premières présentant une proportion de dioxyde de silicium comprise entre 40 pour cent en masse et 75 pour cent en masse, en particulier comprise entre 50 pour cent en masse et 65 pour cent en masse, ou de 57,5 pour cent en masse,
e. le matériau de régénération (7) est fondu à partir d'un mélange de matières premières présentant une proportion d'oxyde d'aluminium comprise entre 1 pour cent en masse et 10 pour cent en masse, en particulier comprise entre 2 pour cent en masse et 6 pour cent en masse, ou de 2,5 pour cent en masse ou de 5 pour cent en masse,
f. le matériau de régénération (7) est fondu à partir d'un mélange de matières premières présentant une proportion d'oxyde de calcium comprise entre 0 pour cent en masse et 15 pour cent en masse, en particulier comprise entre 6 pour cent en masse et 10 pour cent en masse, ou de 8 pour cent en masse,
g. le matériau de régénération (7) est fondu à partir d'un mélange de matières premières présentant une proportion d'oxyde de bore comprise entre 0 pour cent en masse et 10 pour cent en masse,
h. le matériau de régénération (7) comprend au moins un métal alcalino-terreux.

13. Installation selon l'une des revendications 9 à 12, **caractérisée en ce que**
a. le matériau de régénération (7) est un granulat, en particulier un granulat présentant une taille de grain comprise entre 0,3 mm et 0,8 mm, ou
b. le matériau de régénération (7) est formé en tant que matériau fritté et/ou en tant que frittes de verre, en particulier des frittes de verre présentant une épaisseur comprise entre 0,1 mm et 0,8 mm, ou
c. le matériau de régénération (7) est laminé en plaques, en particulier des plaques présentant une épaisseur comprise entre 0,1 mm et 0,8 mm, ou est formé sous forme de fragments de plaques, ou
d. le matériau de régénération (7) est formé sous forme de fibres de verre ou sous forme d'au moins un non-tissé réalisé à partir de fibres de verre ou sous forme de laine de verre.

14. Procédé de trempe et/ou de renforcement d'objets en verre, **caractérisé en ce que** le verre à tremper et/ou à renforcer est immergé dans un sel fondu (2) comprenant du nitrate de potassium ou constitué de nitrate de potassium, et **en ce que** le sel fondu (2) est mis en contact de manière continue ou à des intervalles espacés dans le temps avec un matériau de régénération (7) qui est fondu à partir d'un mélange de matières premières présentant une proportion d'oxyde de potassium comprise entre 20 pour cent en masse et 40 pour cent en masse, en particulier comprise entre 25 pour cent en masse et 35 pour cent en masse, ou de 32,5 pour cent en masse.

15. Procédé selon la revendication 14, **caractérisé en ce que** le matériau de régénération (7) présente au moins l'une des caractéristiques a à h de la revendication 12 et/ou au moins l'une des caractéristiques a à d de la revendication 13.
